# EUROPEAN PATENT APPLICATION

(11) **EP 3 079 194 A1**
(43) Date of publication of application: **12.10.2016**
(21) Application number: 16164322.6
(22) Date of filing: 07.04.2016
(51) Int. Cl.: H01M 8/1039, H01M 8/1051, H01M 8/1053, C08J 5/22, H01M 8/1027, H01M 8/1067, H01M 8/1018

(54) **POLYMER ELECTROLYTE MEMBRANE FOR FUEL CELL AND MEMBRANE-ELECTRODE ASSEMBLY FOR FUEL CELL INCLUDING SAME**

(30) Priority: 07.04.2015 KR 20150049135
(71) Applicant: Samsung SDI Co., Ltd., Gyeonggi-do 17084 (KR)
(72) Inventor: KIM, Jun-Young, 17084 Gyeonggi-do (KR); SONG, Kah-Young, 17084 Gyeonggi-do (KR); LEE, Jin-Hwa, 17084 Gyeonggi-do (KR); YUN, Bok-Chun, 17084 Gyeonggi-do (KR); KIM, Tae-Yoon, 17084 Gyeonggi-do (KR)
(74) Representative: Mounteney, Simon James

(57) **Abstract**

A polymer electrolyte membrane for a fuel cell, a fuel cell, and a membrane-electrode assembly for a fuel cell, the polymer electrolyte membrane including a hydrocarbon-based membrane having at least one surface-treated side; and an ionomer layer on the at least one surface-treated side of the hydrocarbon-based membrane, the ionomer layer including a fluorine-based ionomer.

## Description

### BACKGROUND

### 1. Field

Embodiments of the present invention relate to a polymer electrolyte membrane for a fuel cell and a membrane-electrode assembly for a fuel cell including the same.

### 2. Description of the Related Art

As an interest in the environment and in energy depletion has been increased, research and development on commercialization of a fuel cell as an environmentally-friendly and renewable energy source has been conducted. For example, a polymer electrolyte membrane fuel cell (PEMFC) has been recognized as a promising system capable of replacing a conventional energy-transforming element due to high efficiency, high output density, a low operation temperature and environmentally-friendly characteristics.

### SUMMARY

Embodiments of the present invention are directed to a polymer electrolyte membrane for a fuel cell and a membrane-electrode assembly for a fuel cell including the same.

An aspect of the present invention provides a polymer electrolyte membrane for a fuel cell, wherein the polymer electrolyte membrane includes a hydrocarbon-based membrane having at least one surface-treated side; and an ionomer layer on the at least one surface-treated side of the hydrocarbon-based membrane, wherein the ionomer layer includes a fluorine-based ionomer.

The at least one surface-treated side of the hydrocarbon-based membrane may be surface-treated by plasma treating the side of the hydrocarbon-based membrane.

A thickness of the hydrocarbon-based membrane having at least one surface-treated side may be about 3 µm to about 50 µm.

An ion exchange capacity (IEC) of the hydrocarbon-based membrane having at least one surface-treated side may be about 1.0 meq/g to about 3.5 meq/g.

An equivalent weight of the fluorine-based ionomer may be about 500 g/meq to about 1,100 g/meq.

The ionomer layer may further include a nanoparticle.

A size of the nanoparticle may be greater than or equal to about 1 nm and less than about 100 nm.

The nanoparticle may be included in the ionomer layer in an amount of about 0.1 wt% to about 30 wt%, based on a total weight of the ionomer layer.

The nanoparticle may include SiO₂, TiO₂, CeO₂, CsO₂, MnO₂, ZrO₂, or a combination thereof.

The ionomer layer may have a thickness of about 10 nm to about 10 µm.

A loading level of the ionomer layer may be about 0.01 mg/cm² to about 2.0 mg/cm².

The hydrocarbon-based membrane may have two opposite-facing surface-treated sides, and the ionomer layer is on the two surface-treated sides.

Another aspect of the present invention provides a fuel cell including the polymer electrolyte membrane according to an embodiment of the previous aspect, wherein the fuel cell is drivable under a low humidity condition of a relative humidity of less than or equal to about 50%.

A further aspect of the present invention provides a membrane-electrode assembly for a fuel cell, wherein the membrane electrode assembly includes the polymer electrolyte membrane according to an embodiment of the previous aspect; a cathode on one side of the polymer electrolyte membrane; and an anode on another side of the polymer electrolyte membrane.

At least some of the above and other features of the invention are set out in the claims.

### BRIEF DESCRIPTION OF THE DRAWINGS

Features will be apparent to those of skill in the art by describing in detail embodiments with reference to the attached drawings in which:
FIG. 1 illustrates a schematic view showing a membrane-electrode assembly (MEA) for a fuel cell according to one embodiment.
FIG. 2 illustrates an exploded perspective view showing a fuel cell stack according to one embodiment.
FIG. 3 illustrates a scanning electron microscope (SEM) image showing a cross-section of a polymer electrolyte membrane for a fuel cell according to Comparative Example 3.
FIG. 4 illustrates a scanning electron microscope (SEM) image showing a cross-section of a polymer electrolyte membrane for a fuel cell according to Example 1.
FIGS. 5A and 5B illustrate current-voltage graphs of results of membrane-electrode assemblies for a fuel cell according to Comparative Examples 1 to 3 and Example 1 under relative humidity of 50 % and 100 % as a condition of high temperature and low humidity.
FIG. 6 illustrates a graph showing durability of membrane-electrode assemblies for a fuel cell according to Comparative Examples 1 and 2 and Example 1 under a condition of a high temperature and low humidity.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. Like reference numerals refer to like elements throughout.

As used herein, when specific definition is not otherwise provided, it will be understood that when an element such as a layer, film, region, or substrate is referred to as being "on" another element, it can be directly on the other element or intervening elements may also be present.

Hereinafter, a polymer electrolyte membrane for a fuel cell according to one embodiment is described.

The polymer electrolyte membrane for a fuel cell according to an embodiment may block a fuel supplied thereinto and may exchange ions by transporting protons (produced at the catalyst layer of an anode) to the catalyst layer of a cathode. The polymer electrolyte membrane for a fuel cell according to an embodiment includes a hydrocarbon-based membrane and an ionomer layer positioned on at least one side or surface of the hydrocarbon-based membrane.

The hydrocarbon-based membrane may include a hydrocarbon-based polymer having proton conductivity.

The hydrocarbon-based polymer may include, e.g., a polymer having at least one cation exchange group selected from a sulfonic acid group, a carboxylic acid group, a phosphoric acid group, a phosphonic acid group, an acrylate group, a nitrile group, or a derivative thereof, at a side chain. For example, the hydrocarbon-based polymer may be a benzimidazole-based compound, a polyimide-based compound, a polyetherimide-based compound, a polyphenylenesulfide-based compound, a polysulfone-based compound, a polyethersulfone-based compound, a polyetherketone-based compound, a polyether-etherketone-based compound, a polyphenylquinoxaline-based compound, a polycarbonate-based compound, a polyacryl-based compound, a polynitrile-based compound, or a combination thereof. In an implementation, the hydrocarbon-based polymer may be e.g., polyethersulfone, polystyrenesulfonic acid, polyacrylic acid, polyvinylsulfonic acid, poly(2-acrylamide-2-methylpropylsulfonic acid), poly(p-phenylene), poly(phenyleneoxide), polyphosphazene, polyvinylsulfone, polyphenylenesulfone, polyphenylenesulfidesulfone, polyphenylenesulfidesulfonenitrile, polysulfideketone, polyaryleneether, polyketone, polyaryleneetherethernitrile, polyaryleneethersulfoneketone, polyaryleneethernitrile, polyaryleneethersulfone, or a combination thereof. For example, the hydrocarbon-based polymer may be polyethersulfone.

At least one side or surface of the hydrocarbon-based membrane is surface-treated. In an implementation, two opposite-facing sides or surfaces of the hydrocarbon-based membrane may be surface-treated. When the hydrocarbon-based membrane is surface-treated, it may have an excellent interface junction with an ionomer layer introduced thereon, e.g., excellent properties may be exhibited at the interface between the ionomer layer and the hydrocarbon-based membrane. For example, decreased interface resistance may help improve performance of the membrane-electrode assembly, and a remarkable reduction in an undesirable delamination phenomenon at the interface during long-term operation may also help improve durability of the membrane-electrode assembly.

The surface treatment may be a plasma treatment. The plasma treatment may be performed by, e.g., cleaning the surface of the hydrocarbon-based membrane with oxygen gas and activating the surface of the hydrocarbon-based membrane with a gas such as argon or the like. Alternatively, for example, the plasma treatment may be performed by cleaning the surface of the hydrocarbon-based membrane with oxygen as a treatment gas; etching the surface of the hydrocarbon-based membrane with argon, helium, oxygen, or the like as a treatment gas; cross-linking the surface of the hydrocarbon-based membrane by using an inert gas such as argon, helium, or the like; activating the surface of the hydrocarbon-based membrane by using ammonia, argon, helium, methane, nitrogen, tetrafluoromethane, or the like as a treatment gas; polymerizing the surface of the hydrocarbon-based membrane by using a fluoro-based monomer, an acryl-based monomer, or the like; as a treatment gas.

The surface-treated hydrocarbon-based membrane may have a thickness of about 3 µm to about 50 µm, e.g., about 3 µm to about 30 µm, about 5 µm to about 25 µm, about 10 µm to about 25 µm, about 15 µm to about 25 µm, or about 17 µm to about 23 µm (e.g. about 20 µm). Maintaining the thickness of the surface-treated hydrocarbon-based membrane within the range may help ensure that the hydrocarbon-based membrane decreases cross-over of hydrogen gas without sharply increasing resistance of a hydrocarbon-based electrolyte membrane and improves performance of a membrane-electrode assembly and a fuel cell including the hydrocarbon-based membrane.

The surface-treated hydrocarbon-based membrane may have an ion exchange capacity (IEC) of about 1.0 meq/g to about 3.5 meq/g, e.g., about 1.5 meq/g to about 3.0 meq/g, about 2.0 meq/g to about 3.0 meq/g, about 2.0 meq/g to about 2.5 meq/g or about 2.2 meq/g to about 2.4 meq/g (e.g. about 2.3 meq/g). Maintaining the ion exchange capacity of the surface-treated hydrocarbon-based membrane within the range may help ensure that performance of a membrane-electrode assembly and a fuel cell is improved by effectively transporting protons (even under a condition of low humidity) without deteriorating hydrogen ion conductivity of the polymer electrolyte membrane under a condition of high temperature/low humidity.

The ionomer layer is positioned on at least one side or surface of the surface-treated hydrocarbon-based membrane. For example, the ionomer layer may be on the surface-treated side of the hydrocarbon-based membrane. The ionomer layer may have an excellent interface junction with the hydrocarbon-based membrane, e.g., due to the surface treatment of the hydrocarbon-based membrane. The ionomer layer may help increase compatibility among polymers and thus, may help improve interface characteristics with an electrode layer.

The ionomer layer includes a fluorine-based ionomer. The polymer electrolyte membrane according to an embodiment may include a hydrocarbon-based membrane including a hydrocarbon-based polymer and an ionomer layer including fluorine-based ionomer. Thus, the polymer electrolyte membrane may have excellent properties of the fluorine-based layer, e.g., both excellent physical/chemical stability and high hydrogen conductivity at a low temperature of less than about 80 °C, as well as have excellent properties of the hydrocarbon-based membrane, e.g., excellent thermal and chemical stability and mechanical stability. The polymer electrolyte membrane according to an embodiment may realize high driving voltage and conversion efficiency due to low hydrogen permeability.

The fluorine-based ionomer may be or may include, e.g., poly(perfluorosulfonic acid), poly(perfluorocarboxylic acid), a copolymer of tetrafluoroethylene having a sulfonic acid group and fluorovinylether, or the like. These may be used singularly or as a mixture of two or more. For example, the fluorine-based ionomer may be poly(perfluorosulfonic acid).

An equivalent weight of the fluorine-based ionomer may be about 500 g/meq to about 1,100 g/meq, e.g., about 500 g/meq to about 800 g/meq, about 600 g/meq to about 800 g/meq or about 650 g/meq to about 750 g/meq (e.g. about 700 g/meq). Maintaining the equivalent weight of the fluorine-based ionomer within the range may help prevent an undesirable deterioration of hydrogen ion conductivity of the polymer electrolyte membrane under a condition of a high temperature and low humidity, and may help decrease resistance of the polymer electrolyte membrane.

In an implementation, the ionomer layer may further include a nanoparticle (e.g. nanoparticles). The nanoparticle may help remove and trap a radical (e.g., peroxy radical) crossing the polymer electrolyte membrane. Thus, the nanoparticle may play a role of a radical scavenger stabilizing the polymer electrolyte membrane as well as helping to prevent deterioration of hydrogen ion conductivity of the polymer electrolyte membrane under a condition of a high temperature and low humidity and help decrease resistance of the polymer electrolyte membrane.

The nanoparticle may include, e.g., SiO₂, TiO₂, CeO₂, CsO₂, MnO₂, ZrO₂, or a combination thereof.

A size or diameter of the nanoparticle may be greater than or equal to about 1 nm and less than about 100 nm, e.g., greater than or equal to about 3 nm and less than about 75 nm. When the nanoparticle has a size within the range, the nanoparticle may be uniformly dispersed in a composition for forming a coating layer and thus, may help maintain resistance of the polymer electrolyte membrane and also may help improve mechanical characteristics of the polymer electrolyte membrane. The size refers to average particle diameter (D50).

The nanoparticle may be included in an amount of about 0.1 wt% to about 30 wt%, e.g., about 0.5 wt% to about 15 wt%, based on the total weight of the ionomer layer. When the nanoparticle is included within the range, excellent dispersion of the nanoparticle and a uniform coating layer without a phase separation may be obtained, and a proton-moving site may be increased. In an implementation, the nanoparticle may be dispersed as a minute powder into a composition for forming a coating layer, and may help increase a moisturizing site and show a sufficient moisturizing effect and may also be uniformly dispersed. For example, the nanoparticles may help improve a radical scavenger function of stabilizing the polymer electrolyte membrane.

When the ionomer layer further includes the nanoparticle, the fluorine-based ionomer may be included in an amount of about 99.9 wt% to about 70 wt%, e.g., about 99.5 wt% to about 85 wt%, based on the total amount or weight of the ionomer layer. Maintaining the amount of the fluorine-based ionomer within the range may help ensure that proton-transporting capability and interface junction are improved without largely increasing resistance of the polymer electrolyte membrane.

A thickness of the ionomer layer may be about 10 nm to about 10 µm, e.g., about 10 nm to about 5 µm, about 100 nm to about 5 µm, about 100 nm to about 3 µm, about 100 nm to about 1000nm, about 500 nm to about 1000 nm, or about 700 nm to about 900 nm (e.g. about 800 nm). When the ionomer layer has a thickness within the range, performance and durability of a membrane-electrode assembly and a fuel cell may be improved by improving the interface junction between the ionomer layer of the polymer electrolyte membrane and an electrode without largely increasing resistance of the polymer electrolyte membrane.

A loading level of the ionomer layer, e.g., on the hydrocarbon-based membrane, may be about 0.01 mg/cm² to about 2.0 mg/cm², e.g., about 0.01 mg/cm² to about 1.0 mg/cm², about 0.01 mg/cm² to about 0.50 mg/cm², about 0.01 mg/cm² to about 0.30 mg/cm², about 0.10 mg/cm² to about 0.30 mg/cm², about 0.10 mg/cm² to about 0.20 mg/cm², or about 0.15 mg/cm² to about 0.20 mg/cm² (*e.g.* about 0.18 mg/cm²). When the ionomer layer has a loading level within the range, performance and durability of a membrane-electrode assembly and a fuel cell may be improved under a condition of low humidity during the long term operation by preventing deterioration of hydrogen ion conductivity of a polymer electrolyte membrane under a condition of a high temperature and low humidity and by increasing proton-transporting capability and interface junction without largely increasing resistance of the polymer electrolyte membrane.

When the polymer electrolyte membrane having an ionomer layer on at least one surface-treated side of a hydrocarbon-based membrane is applied to a fuel cell, the fuel cell may be operated under a condition of relatively low humidity, e.g., of less than or equal to about 50 %.

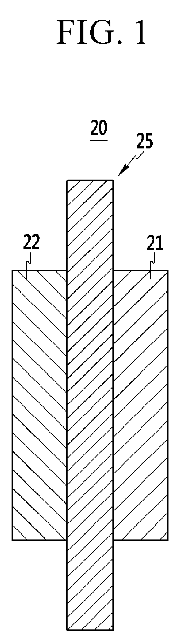

Hereinafter, a membrane-electrode assembly for a fuel cell according to another embodiment is described referring to FIG. 1.

FIG. 1 illustrates a schematic view of a membrane-electrode assembly (MEA) for a fuel cell according to one embodiment.

Referring to FIG. 1, a membrane-electrode assembly for a fuel cell 20 may include a polymer electrolyte membrane 25, a cathode 21 on one side of the polymer electrolyte membrane 25, and an anode 22 on another side of the polymer electrolyte membrane 25.

The polymer electrolyte membrane 25 may be the same as described above.

The cathode 21 and the anode 22 may include an electrode substrate and a catalyst layer.

The catalyst layer may include, e.g., platinum, ruthenium, osmium, a platinum-ruthenium alloy, a platinum-osmium alloy, a platinum-palladium alloy, a platinum-M alloy (M may be at least one metal selected from Ga, Ti, V, Cr, Mn, Fe, Co, Ni, Cu, and Zn), or a combination thereof. The catalyst may be used singularly, or may be supported on a carrier. The carrier may include, e.g., carbon such as acetylene black, denka black, activated carbon, ketjen black, and graphite, or an inorganic material particulate such as alumina, silica, titania (titanium dioxide), and zirconia.

The catalyst layer may further include an ionomer to help improve adherence and proton transfer properties of the catalyst layer, in addition to the catalyst.

The ionomer may include a polymer resin having proton conductivity and specifically a polymer resin having a cation exchange group selected from a sulfonic acid group, a carboxylic acid group, a phosphoric acid group, a phosphonic acid group, and derivatives thereof at its side chain. For example, the ionomer may include at least one polymer resin selected from a fluorine-based polymer, a benzimidazole-based polymer, polyimide-based polymer, a polyetherimide-based polymer, a polyphenylenesulfide-based polymer, a polysulfone-based polymer, polyethersulfone-based polymer, a polyetherketone-based polymer, a polyether-etherketone-based polymer and a polyphenylquinoxaline-based polymer. In an implementation, the ionomer may include at least one polymer resin selected from poly(perfluorosulfonic acid), poly(perfluorocarboxylic acid), a copolymer of tetrafluoroethylene having a sulfonic acid group and fluorovinylether, sulfide polyetherketone, aryl ketone, poly(2,2'-m-phenylene)-5,5'-bibenzimidazole and poly(2,5-benzimidazole).

Hydrogen (H) in the cation exchange group of the polymer resin having proton conductivity may be substituted with Na, K, Li, Cs, or tetrabutylammonium. When the H in the cation exchange group of the terminal end of the side chain is substituted with Na or tetrabutylammonium, NaOH or tetrabutylammonium hydroxide may be used during preparation of the catalyst composition, respectively. When the H is substituted with K, Li, or Cs, suitable compounds for the substitutions may be used.

The ionomer may be used singularly or in combination. The ionomer may be used along with a non-conductive compound to help improve adherence with a polymer electrolyte membrane. The non-conductive compound may be included in a controlled amount to adapt to their purposes.

Examples of the non-conductive compound may include at least one selected from polytetrafluoroethylene (PTFE), a tetrafluoroethylene-hexafluoropropylene copolymer (FEP), a tetrafluoroethylene-perfluoro alkylvinylether copolymer (PFA), ethylene/tetrafluoroethylene (ETFE), an ethylenechlorotrifluoro-ethylene copolymer (ECTFE), polyvinylidene fluoride, a polyvinylidene fluoride-hexafluoropropylene copolymer (PVdF-HFP), dodecylbenzenesulfonic acid, and sorbitol.

The ionomer may be included in an amount of about 15 wt% to about 50 wt%, e.g., about 20 wt% to about 40 wt%, based on the total amount or weight of the catalyst layer. When the ionomer is included within the range, adherence of the catalyst layer may be improved, and proton transfer efficiency may be increased.

The electrode substrate may play a role of supporting an electrode and diffusing a fuel and an oxidizing agent into a catalyst layer, so that reactants may easily approach the catalyst layer, and is also referred to as a gas diffusion layer.

The electrode substrates may be formed from a material such as carbon paper, carbon cloth, carbon felt, or a metal cloth (a porous film composed of metal fiber or a metal film disposed on a surface of a cloth composed of polymer fibers (metalized polymer fibers)).

The electrode substrates may be treated with a fluorine-based resin to be water-repellent to help prevent deterioration of diffusion efficiency due to water generated during operation of a fuel cell. The fluorinated resin may include, e.g., polyvinylidene fluoride, polytetrafluoroethylene, fluorinated ethylene propylene, polychlorotrifluoroethylene, a fluoroethylene polymer, or the like.

In order to help increase reactant diffusion effects, a microporous layer may be further formed on the electrode substrate. The microporous layer may include conductive powders with a certain particle diameter, e.g., a carbon powder, carbon black, acetylene black, activated carbon, a carbon fiber, fullerene, or carbon nanotube. The microporous layer may be formed by coating a composition including conductive powder, a binder resin, and a solvent on the gas diffusion layer. The binder resin may include, e.g., polytetrafluoroethylene, polyvinylidene fluoride, polyvinyl alcohol, celluloseacetate, or the like, and the solvent may include, e.g., alcohol such as ethanol, isopropylalcohol, n-propylalcohol, butanol, or the like, water, dimethyl acetamide, dimethylsulfoxide, N-methylpyrrolidone, or the like. The coating may be performed using, e.g., screen printing, spray coating, and coating with a doctor blade depending on viscosity of the composition.

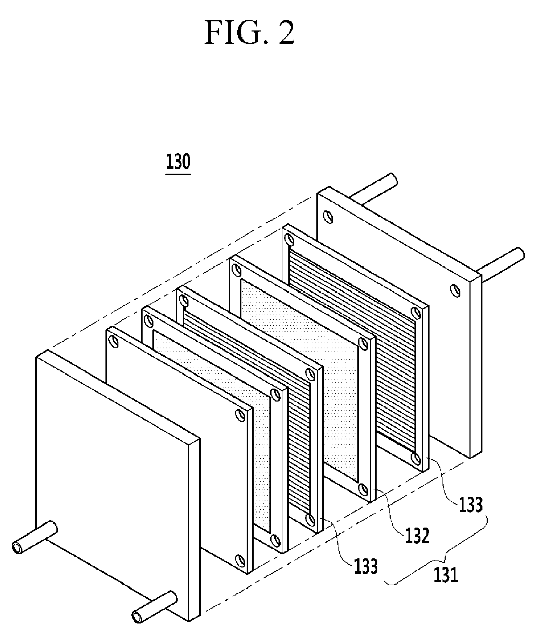

The fuel cell may include a stack where a hydrogen gas electrochemically reacts with an oxidizing agent to generate electrical energy. The stack is described referring to FIG. 2.

FIG. 2 illustrates an exploded perspective view of a fuel cell stack according to one embodiment.

Referring to FIG. 2, the stack 130 may include a plurality of unit cells 131 where an oxidation/reduction reaction of a hydrogen gas and an oxidizing agent occurs to generate electrical energy.

Each unit cell 131 refers to a unit cell to generate electricity, and may include a membrane-electrode assembly 132 (where a hydrogen gas and oxygen of an oxidizing agent are oxidized/reduced), and a separator (or a bipolar plate) 133 to supply a hydrogen gas and an oxidizing agent to the membrane-electrode assembly 132. The membrane-electrode assembly 132 may be the same as described above. The separators 133 may be arranged on sides, e.g., both sides of the membrane-electrode assembly 132. The separators that are respectively located at the most exterior sides of the stack are referred to as end plates.

The end plate of the separators 133 may include a first supply tube having a pipe shape for injecting the supplied hydrogen gas, and a second supply tube having a pipe shape for injecting the oxygen gas. The other end plate may include a first discharge tube for discharging the remaining hydrogen gas that does not finally react in the plurality of unit cells 131, to the outside, and a second discharge tube for discharging the remaining oxidizing agent that does not react finally in the plurality of unit cells 131, to outside.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

### (Manufacture of Polymer Electrolyte Membrane)

### Example 1

A hydrocarbon-based membrane of polyethersulfone was cleaned on its surface by using oxygen gas, etched and activated thereon by using Ar gas and then, surface-treated through a plasma treatment. The surface-treated hydrocarbon-based membrane had two opposite-facing surface-treated sides. The surface-treated hydrocarbon-based membrane had a thickness of 20 µm and ion exchange capacity (IEC) of 2.3 meq/g when the ion exchange capacity was measured with a titration method.

Then, a mixed solution of 3 wt% of fluorine-based ionomer and 97 wt% of a solvent was spray-coated on both sides of the surface-treated hydrocarbon-based membrane to form an ionomer layer, manufacturing a polymer electrolyte membrane. The fluorine-based ionomer was poly(perfluorosulfonic acid) having an equivalent weight of 700 g/meq, and the solvent was a mixed solution of isopropyl alcohol and deionized water (a volume ratio = 3:7). The ionomer layer had a thickness of 800 nm and a loading level of 0.18 mg/cm² on either side of the surface-treated hydrocarbon-based membrane.

### Comparative Example 1

A hydrocarbon-based polymer electrolyte membrane of polyethersulfone that was not surface-treated (e.g., having surfaces that were untreated) was used.

### Comparative Example 2

A hydrocarbon-based polymer electrolyte membrane of polyethersulfone was surface-treated according to the same method as Example 1 (but did not include the ionomer layer).

### Comparative Example 3

A polymer electrolyte membrane was manufactured by forming an ionomer layer on both sides of a hydrocarbon-based membrane of polyethersulfone (that was not surface-treated), according to the same method as Example 1.

### (Manufacture of Membrane-Electrode Assembly for Fuel Cell)

Each 7 cm × 7 cm-sized polymer electrolyte membrane according to Example 1 and Comparative Examples 1 to 3 and 5 cm × 5 cm-sized anode and cathode catalyst layers respectively coated on an anode and a cathode were prepared.

A Pt-Ru anode catalyst and a Pt-Co cathode catalyst were respectively mixed with a Nafion^{®}/H₂O/2-propanol solution having 5 wt% concentration, glycol, and deionized water, to prepare an anode slurry and a cathode slurry, respectively.

The slurries were respectively coated on a TEFLON™ (tetrafluoroethylene) film using a doctor blade method and then dried to prepare an anode catalyst layer film, and a cathode catalyst layer film, respectively. Herein, the anode catalyst layer and the cathode catalyst layer respectively had catalyst loading amounts of 0.1 mg/cm² and 0.4 mg/cm².

Each polymer electrolyte membranes according to Example 1 and Comparative Examples 1 to 3 were disposed between the anode catalyst layer film and the cathode catalyst layer film, compressed at 165 °C at a pressure of 20 kgf for 3 minutes, and the TEFLON™ film was removed from the resultant, to manufacture a membrane-electrode assembly having the anode catalyst layer and cathode catalyst layer bonded on the polymer electrolyte membrane.

### Evaluation 1: SEM Analysis of Polymer Electrolyte Membrane

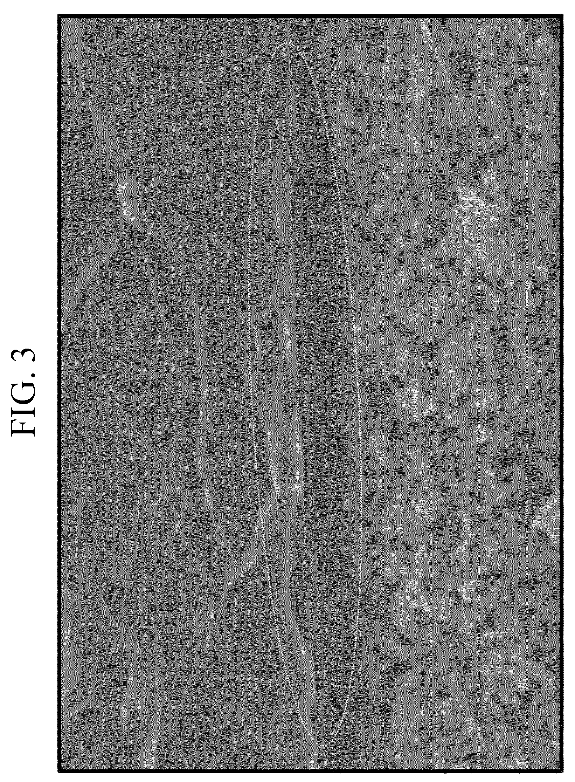

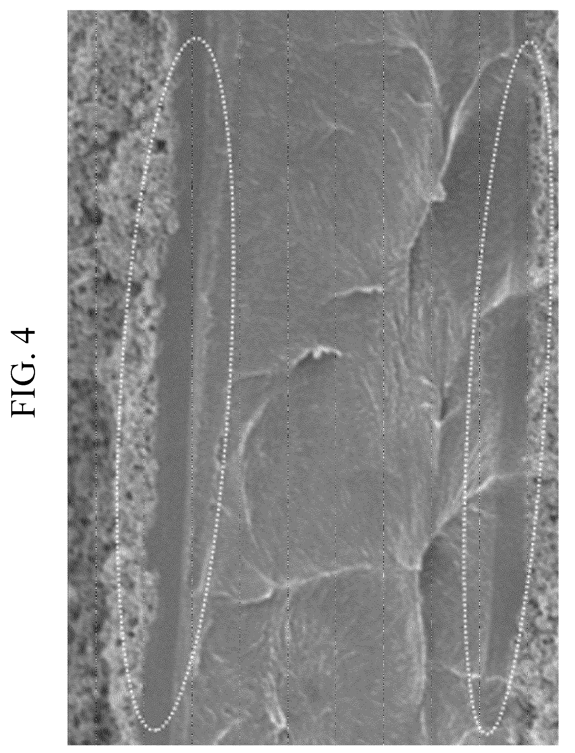

FIG. 3 illustrates a scanning electron microscope (SEM) image showing a cross-section of the polymer electrolyte membrane for a fuel cell according to Comparative Example 3. FIG. 4 illustrates a scanning electron microscope (SEM) image showing a cross-section of the polymer electrolyte membrane for a fuel cell according to Example 1.

Referring to FIG. 3, the polymer electrolyte membrane manufactured by coating an ionomer layer (including a fluorine-based ionomer) on a hydrocarbon-based membrane that had not been surface-treated, according to Comparative Example 3, showed insufficient interface junction between the hydrocarbon-based membrane and the ionomer layer. The insufficient interface junction caused a resistance increase at the interface and performance degradation of the membrane-electrode assembly, and also accelerated stress spread and delamination phenomenon on the interface. Thus, durability of the polymer electrolyte membrane was deteriorated.

Referring to FIG. 4, the polymer electrolyte membrane manufactured by coating an ionomer layer (containing fluorine-based ionomer) on a surface-treated hydrocarbon-based membrane according to Example 1 showed an excellent interface junction between the hydrocarbon-based membrane and the ionomer layer. Accordingly, the excellent interface junction decreased resistance on the interface and improved performance of the membrane-electrode assembly. Thus, stress spread and a delamination phenomenon during the long-term operation were suppressed, and durability of the polymer electrolyte membrane was improved.

### Evaluation 2: Performance of Membrane-Electrode Assembly

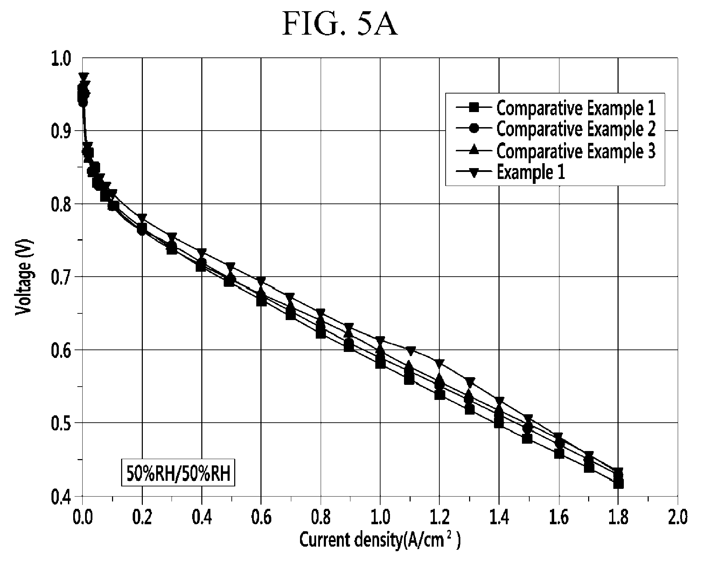

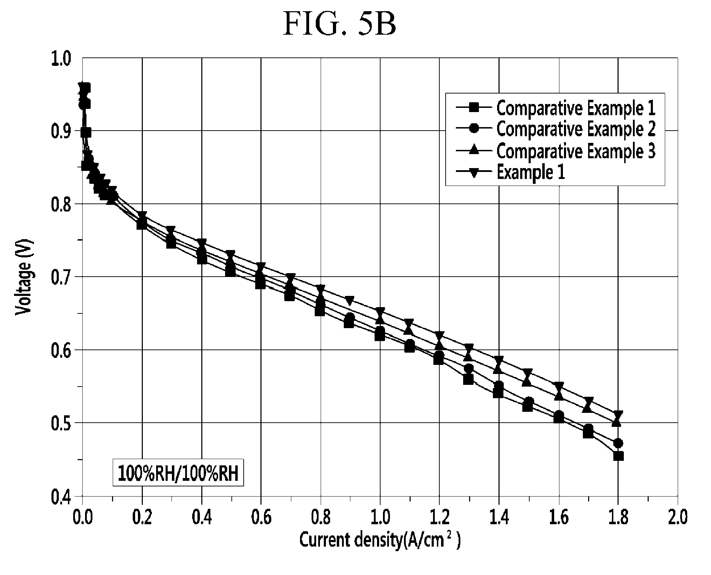

Performance of each membrane-electrode assembly according to Example 1 and Comparative Examples 1 to 3 was measured at 65 °C by respectively supplying a cathode with air having relative humidity (RH) of 50 % and 100 % and an anode with H₂ having relative humidity (RH) of 50 % and 100 %. Results are provided in the following Table 1 and FIGS. 5A and 5B.

FIGS. 5A and 5B illustrate current-voltage graphs showing each performance result of the membrane-electrode assemblies for a fuel cell according to Comparative Examples 1 to 3 and Example 1 under a low humidity condition (relative humidity 50 %) and a high humidity condition (relative humidity 100 %).

**Table 1**

| | Current density at 0.6 V (A/cm²) | Voltage at 1.5 A/cm² (V) |
|---|---|---|
| Comparative Example 1 | 0.90 | 0.479 |
| Comparative Example 2 | 0.95 | 0.492 |
| Comparative Example 3 | 1.00 | 0.498 |
| Example 1 | 1.10 | 0.507 |

Referring to Table 1 and FIGS. 5A and 5B, Example 1 (in which the ionomer layer containing fluorine-based ionomer was coated on a surface-treated hydrocarbon-based membrane) showed high current density and power density and thus, excellent performance under a condition of a high temperature and low humidity, compared with Comparative Examples 1 to 3.

### Evaluation 3: Durability of Membrane-Electrode Assembly

In the membrane-electrode assemblies according to Example 1 and Comparative Examples 1 to 3, an anode and a cathode were supplied with N₂ gas at 80 °C, and each membrane-electrode assembly was repetitively supplied with dry gas for 2 minutes and with wet gas (150 % of RH) for 2 minutes. This process was set to be 1 cycle. This process was repeated to evaluate durability, and H₂ cross-over was measured at 90 °C and 0.2 V every 1,000th cycle to examine whether the polymer electrolyte membrane was degraded.

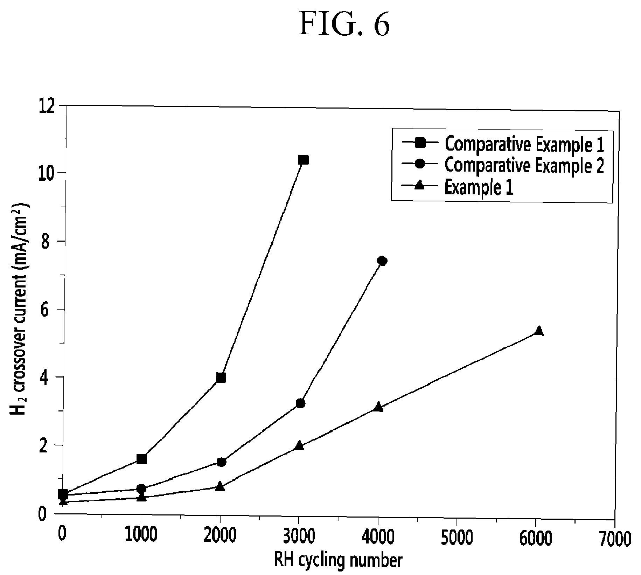

FIG. 6 illustrates a graph showing durability of the membrane-electrode assemblies for a fuel cell according to Comparative Examples 1 and 2 and Example 1 at a high temperature under a condition of low humidity.

Referring to FIG. 6, Example 1 (in which the ionomer layer containing fluorine-based ionomer was coated on a surface-treated hydrocarbon-based membrane) showed excellent durability, compared with Comparative Examples 1 and 2.

By way of summation and review, the polymer electrolyte membrane fuel cell (PEMFC) may have concerns regarding performance, a cycle-life characteristics, a price, and the like, for more commercialization. A membrane-electrode assembly (MEA) may have a great influence on the improvement of the polymer electrolyte membrane fuel cell, e.g., a polymer electrolyte membrane may be one of the essential factors having an influence on performance and price of the membrane-electrode assembly (MEA).

The polymer electrolyte membrane (for operating the polymer electrolyte membrane fuel cell (PEMFC)) may have high hydrogen ion conductivity, chemical stability, low fuel permeation, high mechanical strength, a low moisture content, excellent dimensional stability, and the like. Some polymer electrolyte membranes may hardly realize high performance in an environment of a high temperature and low humidity.

The embodiments of the present invention provide a polymer electrolyte membrane for a fuel cell having high performance and long cycle-life characteristics under a condition of high temperature and low humidity.

A membrane-electrode assembly for a fuel cell having high performance and long cycle-life characteristics under a condition of high temperature and low humidity may be realized by applying the polymer electrolyte membrane for a fuel cell.

Embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A polymer electrolyte membrane for a fuel cell, the polymer electrolyte membrane comprising:
a hydrocarbon-based membrane having at least one surface-treated side; and
an ionomer layer on the at least one surface-treated side of the hydrocarbon-based membrane, the ionomer layer including a fluorine-based ionomer.

2. A polymer electrolyte membrane according to claim 1, wherein the at least one surface-treated side of the hydrocarbon-based membrane is surface-treated by plasma treating the side of the hydrocarbon-based membrane.

3. A polymer electrolyte membrane according to claim 1 or claim 2, wherein a thickness of the hydrocarbon-based membrane having at least one surface-treated side is about 3 µm to about 50 µm.

4. A polymer electrolyte membrane according to any one of claims 1 to 3, wherein an ion exchange capacity (IEC) of the hydrocarbon-based membrane having at least one surface-treated side is about 1.0 meq/g to about 3.5 meq/g.

5. A polymer electrolyte membrane according to any one of claims 1 to 4, wherein an equivalent weight of the fluorine-based ionomer is about 500 g/meq to about 1,100 g/meq.

6. A polymer electrolyte membrane according to any one of claims 1 to 5, wherein the ionomer layer further includes a nanoparticle.

7. A polymer electrolyte membrane according to claim 6, wherein a size of the nanoparticle is greater than or equal to about 1 nm and less than about 100 nm.

8. A polymer electrolyte membrane according to claim 6 or claim 7, wherein the nanoparticle is included in the ionomer layer in an amount of about 0.1 wt% to about 30 wt%, based on a total weight of the ionomer layer.

9. A polymer electrolyte membrane according to any one of claims 6 to 8, wherein the nanoparticle includes SiO₂, TiO₂, CeO₂, CsO₂, MnO₂, ZrO₂, or a combination thereof.

10. A polymer electrolyte membrane according to any one of claims 1 to 9, wherein the ionomer layer has a thickness of about 10 nm to about 10 µm.

11. A polymer electrolyte membrane according to any one of claims 1 to 10, wherein a loading level of the ionomer layer is about 0.01 mg/cm² to about 2.0 mg/cm².

12. A polymer electrolyte membrane according to any one of claims 1 to 11, wherein:
the hydrocarbon-based membrane has two opposite-facing surface-treated sides, and
the ionomer layer is on the two surface-treated sides.

13. A fuel cell, comprising the polymer electrolyte membrane according to any one of claims 1 to 12, wherein the fuel cell is drivable under a low humidity condition of a relative humidity of less than or equal to about 50%.

14. A membrane-electrode assembly for a fuel cell, the membrane electrode assembly comprising:
the polymer electrolyte membrane according to any one of claims 1 to 12;
a cathode on one side of the polymer electrolyte membrane; and
an anode on another side of the polymer electrolyte membrane.
